# EUROPEAN PATENT APPLICATION

(11) **EP 2 993 611 A1**
(43) Date of publication of application: **09.03.2016**
(21) Application number: 15182863.9
(22) Date of filing: 28.08.2015
(51) Int. Cl.: G06K 7/10, G06K 7/00

(54) **IC LABEL READER**

(30) Priority: 03.09.2014 JP 2014179144
(71) Applicant: Toshiba TEC Kabushiki Kaisha, Tokyo 141-0032 (JP)
(72) Inventor: SAKURAI, Wataru, Shinagawa-ku, Tokyo 141-0032 (JP); YAGINUMA, Jun, Shinagawa-ku, Tokyo 141-0032 (JP); SANO, Kouichi, Shinagawa-ku, Tokyo 141-0032 (JP); TSUCHIDA, Sunao, Shinagawa-ku, Tokyo 141-0032 (JP)
(74) Representative: Takeuchi, Maya

(57) **Abstract**

An IC label reader comprises an antenna having a first power supply point for power supply and a second power supply point for power supply which substantially form a 90-degree angle, a first emitting unit configured to emit a horizontally polarized wave from the antenna by supplying power to the first power supply point, a second emitting unit configured to emit a perpendicularly polarized wave from the antenna by supplying power to the second power supply point, a third emitting unit configured to emit, from the antenna, a circularly polarized wave generated by synthesizing the horizontally polarized wave and the perpendicularly polarized wave with a phase difference between the horizontally polarized wave and the perpendicularly polarized wave by simultaneously supplying power to the first and the second power supply points, and a switching unit configured to selectively switch the first, the second and the third emitting units.

## Description

### FIELD

Embodiments described herein relate to an IC label reader.

### BACKGROUND

For example, in a store such as a clothing store, the operator of the store regularly carries out an inventory management for managing the stock of the commodities or cloths in the store. The operator uses an IC (Integrated Circuit) tag or IC label reader to read the IC label affixed on a commodity in stock.

However, to search for a specified IC label attached to a commodity in the inventory management, the operator first detects a response from the IC label to find the direction of the specified commodity. In this case, the reading distance of the IC label reader is required to be long. On the other hand, in a case in which the target (specified) IC label is found out after the response from the target IC label is detected, the IC label reader is required to be capable of reading the target IC label, no matter which direction the target IC label faces.

### BRIEF DESCRIPTION OF DRAWINGS

Fig. 1 is a side view illustrating the appearance of an RFID (Radio Frequency Identification) reader/writer equipped with a portable terminal;
Fig. 2 is a block diagram illustrating hardware structures of the RFID reader/writer and the portable terminal;
Fig. 3 is a diagram illustrating the connection relationship between an antenna and a switch;
Fig. 4 is a diagram illustrating the connection relationship of the antenna, the switch and a coupler;
Fig. 5 is a diagram schematically illustrating a horizontally polarized wave;
Fig. 6 is a diagram schematically illustrating a perpendicularly polarized wave;
Fig. 7 is a diagram schematically illustrating a circularly polarized wave generated by synthesizing a horizontally polarized wave with a perpendicularly polarized wave the phase of which is shifted by 90 degrees with respect to the horizontally polarized wave;
Fig. 8 is a block diagram illustrating the functional structure of an RFID reader/writer;
Fig. 9 is a flowchart illustrating a control processing carried out by the RFID reader/writer;
Fig. 10 is a flowchart illustrating a control processing carried out by the RFID reader/writer; and
Fig. 11 is a flowchart illustrating a control processing carried out by the portable terminal.

### DETAILED DESCRIPTION

In accordance with an embodiment, an IC label reader comprises an antenna having a first power supply point for power supply and a second power supply point for power supply which substantially form a 90-degree angle, a first emitting unit configured to emit a horizontally polarized wave from the antenna by supplying power to the first power supply point, a second emitting unit configured to emit a perpendicularly polarized wave from the antenna by supplying power to the second power supply point, a third emitting unit configured to emit, from the antenna, a circularly polarized wave generated by synthesizing the horizontally polarized wave and the perpendicularly polarized wave with a phase difference between the horizontally polarized wave and the perpendicularly polarized wave by simultaneously supplying power to the first and the second power supply points, and a switching unit configured to selectively switch the first, the second and the third emitting units.

Preferably, the third emitting unit is configured to emit the circularly polarized wave generated by synthesizing the horizontally polarized wave and the perpendicularly polarized wave with a 90 degree phase difference therebetween.

Preferably, the IC label reader further comprises a first power supply line configured to supply power to the first power supply point.

Preferably, the IC label reader further comprises a second power supply line configured to supply power to the second power supply point.

Preferably, the length of the second power supply line is different from that of the first power supply line.

Preferably, in the phase difference between the horizontally polarized wave and the perpendicularly polarized wave is generated with powers supplied through the first power supply line and the second power supply line.

Preferably, the IC label reader further comprises a first power supply line configured to supply power to the first power supply point.

Preferably, the IC label reader further comprises a second power supply line configured to supply power to the second power supply point.

Preferably, the length of the second power supply line is different from that of the first power supply line.

Preferably, the phase difference between the horizontally polarized wave and the perpendicularly polarized wave is generated with powers supplied through the first power supply line and the second power supply line.

Preferably, the IC label reader further comprises a coupler configured to simultaneously supply power to the first and the second power supply points with the phase difference.

Preferably, the horizontally polarized wave and the perpendicularly polarized wave, which are synthesized to generate the circularly polarized wave, are made different in phase from one to the other with a power supplied from the coupler to the first power supply point and a power supplied from the coupler to the second power supply point.

Preferably, the antenna has a surface from which each polarized wave having a high directivity in the direction orthogonal to the surface is emitted.

Preferably, the IC label reader further comprises a specified IC label input unit configured to input specified IC label information for specifying an IC label.

Preferably, the IC label reader further comprises a specified IC label storage unit configured to store the input specified IC label information.

Preferably, the IC label reader further comprises a receiving unit configured to receive a response from an IC label which receives the electric wave emitted from the first emitting unit, the second emitting unit or the third emitting unit.

Preferably, the IC label reader further comprises an output unit configured to output direction information representing the direction of the location of the IC label specified by the stored specified IC label information according to the received response condition.

The above, and other objects, features and advantages of the present invention will be made apparent from the following description of the preferred embodiments, given as non-limiting examples, with reference to the drawings.

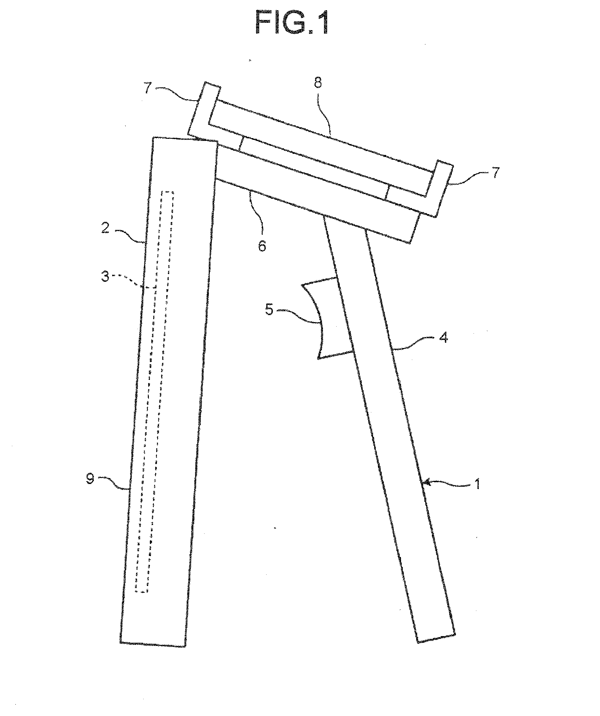

The IC label reader of an embodiment is described in detail below with reference to Fig. 1 to Fig. 11. A hand-held RFID reader/writer is described as an IC label reader in the following embodiments. The present invention is not limited to the following embodiments. Further, although a clothing store in which cloths are sold is described as an example of a store in embodiments, the store may be another shop in which other commodities are sold.

Fig. 1 is a side view of an RFID reader/writer 1 according to an embodiment. In Fig. 1, an RFID reader/writer 1 includes a main body section 2, a grip section 4 and a placing section 6. The main body section 2 has a plane part 9 and an antenna 3, formed in a quadrangular shape, which is arranged in the plane part 9. The grip section 4 which is gripped by the operator is arranged behind the main body section 2. Generally, the antenna 3 is called as a patch antenna.

The trigger switch 5 is arranged on the grip section 4. If the operator performs an 'ON' operation on the trigger switch 5, then the RFID reader/writer 1 emits electric wave from the antenna 3. If the operator performs an 'OFF' operation on the trigger switch 5, then the RFID reader/writer 1 stops the emission of electric wave from the antenna 3.

The antenna 3 emits, toward an IC (Integrated Circuit) label affixed on a commodity displayed on a shelf, electric wave for reading information stored in the IC label. The IC label receiving the emitted electric wave sends IC label information for identifying the IC label and IC label information containing commodity information relating to the commodity as a response wave. The antenna 3 has a high directivity in a direction orthogonal to the plane part 9. Thus, the antenna 3 emits especially strong electric wave, which spreads in the directions within a given range, in the direction orthogonal to the plane part 9. Thus, the electric wave emitted from the antenna 3 easily reaches an IC label located in the orthogonal direction to the plane of the antenna 3 within the given range.

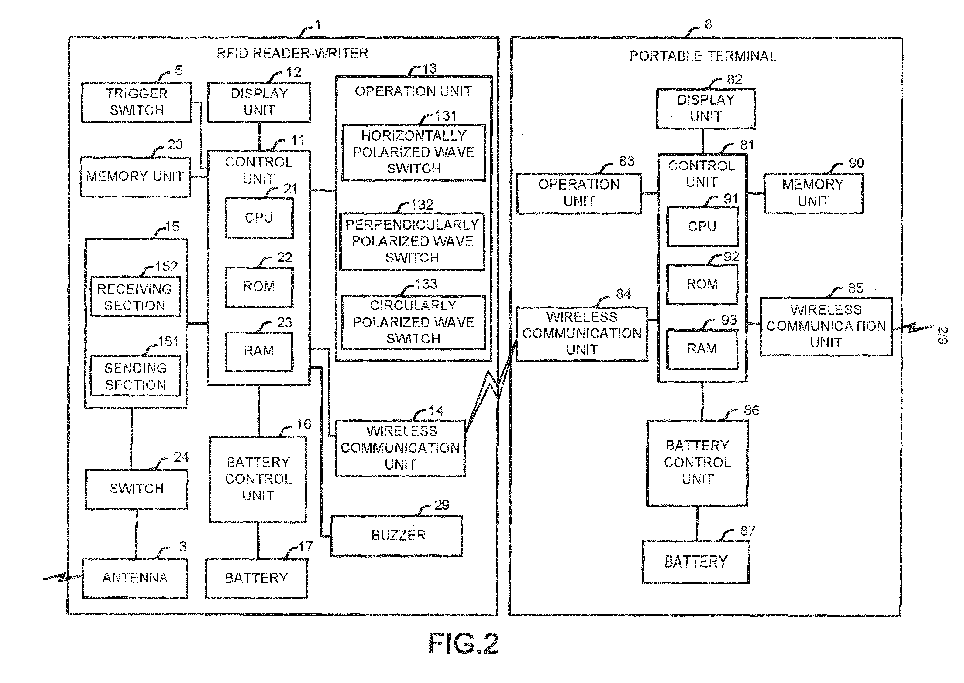

The placing section 6 is arranged between the main body section 2 and the grip section 4 to connect with the main body section 2. The placing section 6 has a pair of retaining portions 7 which retains the upper part and the lower part of a portable terminal 8 held on the placing section 6 in a detachable manner. The portable terminal 8 has a large display unit 82 (refer to Fig. 2). The portable terminal 8 is retained by the retaining sections 7 in such a manner that the display unit 82 (refer to Fig. 2) is directed in a direction in which the operator of the RFID reader/writer 1 can see the display unit 82. The portable terminal 8 held on the placing section 6 is capable of communicating with the RFID reader/writer 1, using an NFC (Near Field Communication) communication technology. The operator uses the display unit 82 of the portable terminal 8 as a display unit of the RFID reader/writer 1. The portable terminal is, for example, a smart phone, a mobile phone, a PDA (Personal Digital Assistant) and the like.

Fig. 2 is a block diagram illustrating hardware structures of the RFID reader/writer 1 and the portable terminal 8. In Fig. 2, the RFID reader/writer 1 comprises a CPU 21, a ROM 22, a RAM 23 and a memory unit 20. The CPU 21 serves as a main control body. The ROM 22 stores various programs. The RAM 23 develops various data. The memory unit 20 stores various programs and data. The CPU 21, the ROM 22, the RAM 23 and the memory unit 20 are connected with each other via a data bus line (not shown). The CPU 21, the ROM 22 and the RAM 23 constitute a control unit 11. The CPU 21 runs according to the control programs stored in the ROM 22 and the memory unit 20, thereby executing a control processing described later.

The memory unit 20, which includes a non-volatile memory, such as an HDD (Hard Disc Drive) and a flash memory, which is capable of storing information even if power is off, stores programs including the control programs.

The control unit 11 connects a display unit 12, an operation unit 13, a wireless communication unit 14 and an emission reception unit 15 via a data bus line. Further, the control unit 11 connects a battery control unit 16, the trigger switch 5 and a buzzer 29 via a data bus line.

The display unit 12 composed of a liquid crystal panel and the like displays various kinds of information for operator. The operation unit 13, which is composed of a horizontally polarized wave switch 131, a perpendicularly polarized wave switch 132 and a circularly polarized wave switch 133, a keyboard and the like, is operated to input various kinds of information. The wireless communication unit 14 communicates with the wireless communication unit 84 of the portable terminal 8. The wireless communication unit 14 performs transmission/reception of various kinds of information to/from the wireless communication unit 84 in response to a control instruction received from the control unit 11.

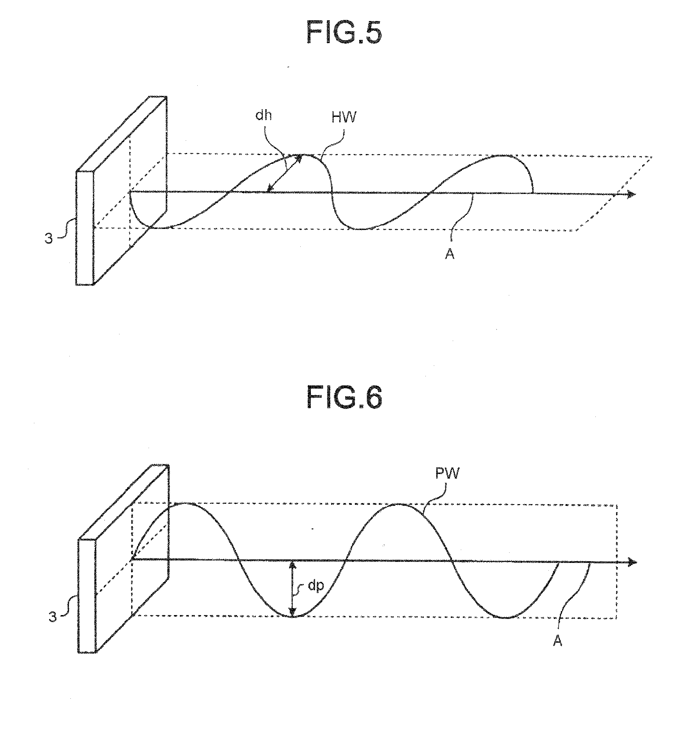

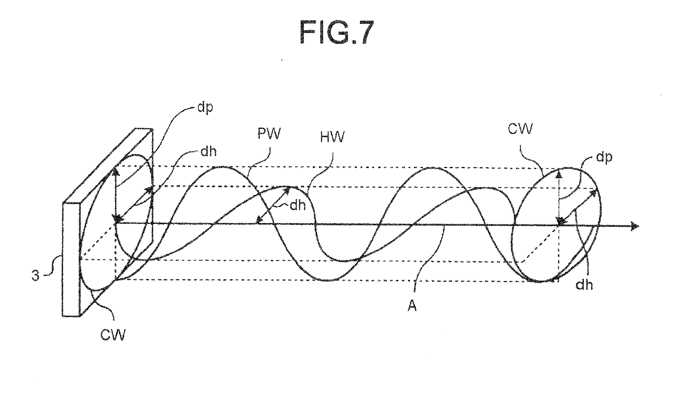

The horizontally polarized wave switch 131 is used to radiate a horizontally polarized wave HW (refer to Fig. 5) from the antenna 3. The operator switches to the horizontally polarized wave switch 131 to emit a horizontally polarized wave from the antenna 3. The perpendicularly polarized wave switch 132 is used to emit a perpendicularly polarized wave PW (refer to Fig. 6) from the antenna 3. The operator switches to the perpendicularly polarized wave switch 132 to emit a perpendicularly polarized wave from the antenna 3. The circularly polarized wave switch 133 is used to emit a circularly polarized wave CW (refer to Fig. 7) from the antenna 3. The operator switches to the circularly polarized wave switch 133 to emit a circularly polarized wave from the antenna 3.

The emission reception unit 15 includes a sending section 151 and a receiving section 152. The sending section 151 supplies power to the antenna 3 so that the antenna 3 can emit electric wave. The receiving section 152 receives the electric wave through the antenna 3.

A battery 17 supplies power to each unit of the RFID reader/writer 1 to electrically activate the units. The battery control unit 16 detects the remaining capacity of the battery 17 according to an instruction from the control unit 11. Further, the battery control unit 16 fills power into (charges) the battery 17 according to an instruction from the control unit 11.

The switch 24 sends a power supply signal from the sending section 151 to the antenna 3. The switch 24 switches the signal sent from the sending section 151 so as to emit a perpendicularly polarized wave from the antenna 3. Further, the switch 24 switches the signal sent from the sending section 151 so as to emit a horizontally polarized wave from the antenna 3. Further, the switch 24 switches the signal sent from the sending section 151 so as to emit a circularly polarized wave from the antenna 3.

The buzzer 29 buzzes according to various operations and actions of the RFID reader/writer 1 to inform information for the operator.

In Fig. 2, the portable terminal 8 comprises a CPU 91, a ROM 92, a RAM 93 and a memory unit 90. The CPU 91 serves as a main control body. The ROM 92 stores various programs. The RAM 93 develops various data. The memory unit 90 stores various programs. The ROM 92, the RAM 93 and the memory unit 90 are connected with each other via a data bus line (not shown). The CPU 91, the ROM 92 and the RAM 93 constitute a control unit 81. The CPU 91 runs according to the control programs stored in the ROM 92 and the memory unit 90, thereby executing a control processing described later.

The memory unit 90, which includes a non-volatile memory, such as an HDD (Hard Disc Drive) and a flash memory, which is capable of storing information even if power is off, stores programs including the control programs.

The control unit 81 connects a display unit 82, an operation unit 83, the wireless communication unit 84, a wireless communication unit 85 and a battery control unit 86 via a data bus line.

The display unit 82 composed of a liquid crystal panel and the like displays various kinds of information for operator. The operation unit 83 which is composed of, for example, a touch type keyboard, is operated by the operator to input various kinds of information. The wireless communication unit 84 communicates with the wireless communication unit 14 of the RFID reader/writer 1. The wireless communication unit 84 performs transmission/reception of various kinds of information to/from the wireless communication unit 14 according to a control instruction from the control unit 81.

The wireless communication unit 85 performs transmission/reception of various kinds of information to/from an external device (not shown). The battery 87 supplies power to each unit of the portable terminal 8 to electrically activate the units.

The battery control unit 86 detects the remaining capacity of the battery 87 according to an instruction from the control unit 81. Further, the battery control unit 86 fills power into (charges) the battery 87.

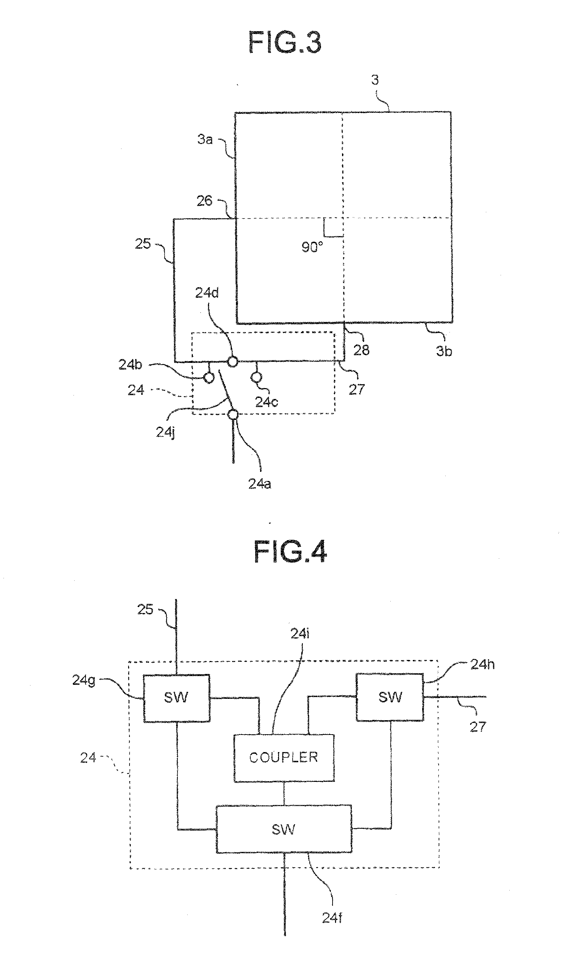

Next, the hardware connection between the antenna 3 and the switch 24 is described with reference to Fig. 3. In Fig. 3, the antenna 3 is formed in a square shape. An emitting plate (not shown) for emitting electric wave from the antenna 3 in a direction orthogonal to the antenna 3 is built in the antenna 3. The emitting plate is made of, for example, a dielectric base the electric wave emitting surface of which is printed with a radiating element, and the side opposite to the electric wave emitting surface is grounded. The emitting surface of the emitting plate (antenna) emits electric wave.

The antenna 3 includes a first power supply point 26 for supplying power to the antenna 3 on the one surface 3a thereof. If the signal sent from the sending section 151 is transmitted to the first power supply point 26, then power is supplied from the first power supply point 26 to the antenna 3. The first power supply point 26 can be located at any position on the one surface 3a. The antenna 3 also includes a second power supply point 28 for supplying power on the other surface 3b thereof which forms a 90-degree angle with the one surface 3a. If the signal sent from the sending section 151 is transmitted to the second power supply point 28, then power is supplied from the second power supply point 28 to the antenna 3. The second power supply point 28 can be located at any position on the other surface 3b.

The direction from which power is supplied from the first power supply point 26 forms a 90-degree angle with the direction from which power is supplied from the second power supply point 28. Accurately, the first power supply point 26 and the second power supply point 28 are set on the emitting plate, but, for the sake of convenience in the description, it is described in the embodiment that they 26, 28 are arranged on the antenna 3. Further, it is described in the embodiment that the first power supply point 26 is on the one surface 3a and the second power supply point 28 is on the other surface 3b. However, the first power supply point 26 and the second power supply point 28 may be at positions located slightly inside the antenna 3 from the surfaces 3a and 3b. The direction of power supplied from the first power supply point 26 forms a 90-degree angle with the direction of power supplied from the second power supply point 28, no matter where the first power supply point 26 and the second power supply point 28 are located.

In the RFID reader/writer 1, the switch 24 is arranged between the antenna 3 and the sending section 151. The switch 24 comprises contacts 24a, 24b, 24c and 24d and a contactor 24j. The contactor 24j is always connected with the contact 24a. The contactor 24j can be selectively connected with the contact 24b, 24c or 24d. If the contactor 24j is connected with the contact 24b, the contacts 24a and 24b are electrically connected with each other. If the contactor 24j is connected with the contact 24c, the contacts 24a and 24c are electrically connected with each other. Further, if the contactor 24j is connected with the contact 24d, the contacts 24a and 24d are electrically connected with each other.

The contact 24b is electrically connected with the first power supply point 26 via a first power supply line 25. The contact 24c is electrically connected with the second power supply point 28 via a second power supply line 27. The contact 24d is electrically connected with the first power supply point 26 via the first power supply line 25. Meanwhile, the contact 24d is electrically connected with the second power supply point 28 via the second power supply line 27.

The first power supply line 25 and the second power supply line 27 are formed with, for example, coaxial cables. A signal line is formed in the center of the coaxial cable, a ground line is formed on the periphery of the coaxial cable, and the signal line is connected with the contact 24b and the first power supply point 26 or the contact 24c and the second power supply point 28. Further, the ground line is connected with the ground of the antenna 3. Consequentially, the signal sent from the sending section 151 is transmitted to the first power supply point 26 or the second power supply point 28 through the signal line of the coaxial cable.

Then, the first power supply line 25 is longer than the second power supply line 27. If the lengths of the power supply lines are different, the phase of the signal transmitted through the first power supply line 25 is shifted to that transmitted through the second power supply line 27. In the embodiment, to deviate the phase of the signal of the first power supply point 26 from that of the signal of the second power supply point 28 by 90 degrees, the lengths of the first power supply line 25 and the second power supply line 27 are adjusted.

In the switch 24 with the foregoing structure, the contact 24a is electrically connected with the contact 24b. Then, the signal sent from the sending section 151 is transmitted to the first power supply point 26 through the first power supply line 25. As a result, power is supplied to the antenna 3 from the first power supply point 26 and thus the antenna 3 emits a horizontally polarized wave (refer to Fig. 5). If the contact 24a is electrically connected with the contact 24c, the signal sent from the sending section 151 is transmitted to the second power supply point 28 through the second power supply line 27. As a result, power is supplied to the antenna 3 from the second power supply point 28 and thus the antenna 3 emits a perpendicularly polarized wave (refer to Fig. 6).

Further, if the contact 24a is electrically connected with the contact 24d, the signal sent from the sending section 151 is transmitted to the first power supply point 26 through the first power supply line 25 and simultaneously, the signal sent from the sending section 151 is transmitted to the second power supply point 28 through the second power supply line 27. Therefore, power is supplied to the antenna 3 from both the first power supply point 26 and the second power supply point 28. In this case, the phase of the signal transmitted to the first power supply point 26 is shifted from that of the signal transmitted to the second power supply point 28 by 90 degrees. Thus, the antenna 3 emits a circularly polarized wave (refer to Fig. 7) generated by synthesizing the horizontally polarized wave with the perpendicularly polarized wave. In this case, the horizontally polarized wave and the perpendicularly polarized wave, i.e., the sources of the circularly polarized wave, are mutually deviated by 90 degrees in phase.

Further, the switch 24 may be structured as shown in Fig. 4. In this case, the length of the first power supply line 25 is equal to that of the second power supply line 27. In Fig. 4, the switch 24 comprises a switch section (hereinafter referred to as an SW section) 24f, an SW section 24g, an SW section 24h and a coupler 24i. The SW section 24f is selectively connected with an optional one of the SW sections 24g and 24h and the coupler 24i. The SW section 24g is selectively connected with either of the SW section 24f and the coupler 24i. The SW section 24h is selectively connected with either of the SW section 24f and the coupler 24i. The coupler 24i is simultaneously connected with the SW sections 24f, 24g and 24h.

The coupler 24i having a primary-side coil and a secondary-side coil is a device for connecting the antenna 3 with the sending section 151 in an adjustment manner. In the embodiment, the coupler 24i shifts the phases of a signal output to the SW section 24g and a signal output to the SW section 24h by 90 degrees.

If the SW section 24f is connected with the SW section 24g, the signal sent from the sending section 151 is transmitted to the first power supply point 26 through the first power supply line 25. Thus, power is supplied to the antenna 3 from the first power supply point 26. Further, if the SW section 24f is connected with the SW section 24h, the signal sent from the sending section 151 is transmitted to the second power supply point 28 through the second power supply line 27. Thus, power is supplied to the antenna 3 from the second power supply point 28. Moreover, if the SW section 24f is connected with the coupler 24i, the signal sent from the sending section 151 is transmitted to the first power supply point 26 through the first power supply line 25. Meanwhile, the signal sent from the sending section 151 is transmitted to the second power supply point 28 through the second power supply line 27. Therefore, power is supplied to the antenna 3 simultaneously from the first power supply point 26 and the second power supply point 28. In this case, the phase of the signal transmitted to the first power supply point 26 is shifted from that of the signal transmitted to the second power supply point 28 by 90 degrees.

Next, a polarized wave emitted from the antenna 3 is described with reference to Fig. 5-Fig. 7. Fig. 5 is a schematic diagram illustrating a horizontally polarized wave HW emitted from the antenna 3. In Fig. 5, the horizontally polarized wave HW is a polarized wave which vibrates on the center line A in the horizontal direction. The amplitude dh of the horizontal polarized wave HW is Dmm. If power is supplied from the first power supply point 26, the antenna 3 emits the horizontally polarized wave HW.

Fig. 6 is a schematic diagram illustrating a perpendicularly polarized wave PW emitted from the antenna 3. In Fig. 6, the perpendicularly polarized wave PW is a polarized wave which vibrates with respect to the center line A in the perpendicular direction. The amplitude dp of the perpendicularly polarized wave PW is Dmm, the same as that of the horizontally polarized wave HW. If power is supplied from the second power supply point 28, the antenna 3 emits the perpendicularly polarized wave PW.

Fig. 7 is a schematic diagram illustrating a circularly polarized wave CW generated by synthesizing the horizontally polarized wave HW and the perpendicularly polarized wave PW. In Fig. 7, the phases of the horizontally polarized wave HW and the perpendicularly polarized wave PW are shifted from each other by 90 degrees. The circularly polarized wave CW generated by synthesizing the horizontally polarized wave HW and the perpendicularly polarized wave PW is typically plotted at the positions a diameter Dmm away from the center line A and formed in a helical shape towards the direction of the center line A indicated by an arrow A. Observed from the advancing direction of the circularly polarized wave CW, the plotted track is a circle having a diameter Dmm with respect to the center line A. The antenna 3 emits the circularly polarized wave CW if power is simultaneously supplied from the first power supply point 26 and the second power supply point 28.

Further, the output level of the circularly polarized wave CW synthesized from the antenna 3 is about 3dB (decibel) lower than those of the horizontally polarized wave HW and the perpendicularly polarized wave PW. Thus, the distance reachable with the circularly polarized wave CW emitted from the antenna 3 is nearly half of the distances reachable with the horizontally polarized wave HW and the perpendicularly polarized wave PW.

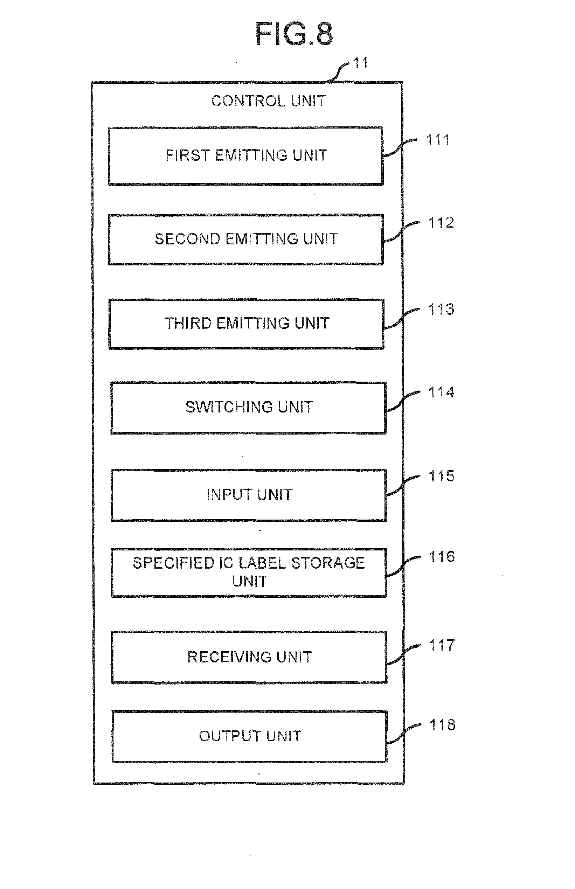

Sequentially, the control processing carried out by the RFID reader/writer 1 is described with reference to Fig. 8-Fig. 10. Fig. 8 is a block diagram illustrating the functional structure of the RFID reader/writer 1. The control unit 11 functions according to the various programs stored in the ROM 22 and the memory unit 20. The control unit 11 functions as a first emitting unit 111, a second emitting unit 112, a third emitting unit 113, a switching unit 114, an input unit 115, a specified IC label storage unit 116, a receiving unit 117 and an output unit 118.

The first emitting unit 111 has a function of emitting the horizontally polarized wave HW from the antenna 3 by supplying power to the antenna 3 from the first power supply point 26.

The second emitting unit 112 has a function of emitting the perpendicularly polarized wave PW from the antenna 3 by supplying power to the antenna 3 from the second power supply point 28.

The third emitting unit 113 has a function of emitting, from the antenna 3, the circularly polarized wave CW generated by synthesizing the horizontally polarized wave HW with the perpendicularly polarized wave PW with a phase difference by simultaneously supplying power to the antenna 3 from the first power supply point 26 and the second power supply point 28.

The switching unit 114 has a function of selectively switching the first emitting unit, the second emitting unit and the third emitting unit.

The input unit 115 has a function of inputting specified IC label information for specifying an IC label.

The specified IC label storage unit 116 has a function of storing the input specified IC label information.

The receiving unit 117 has a function of receiving a response from a specified IC label which receives the electric wave emitted from the first emitting unit 111, the second emitting unit 112 or the third emitting unit 113.

The output unit 118 has a function of outputting information representing the direction of the location of an IC label specified according to the received response condition.

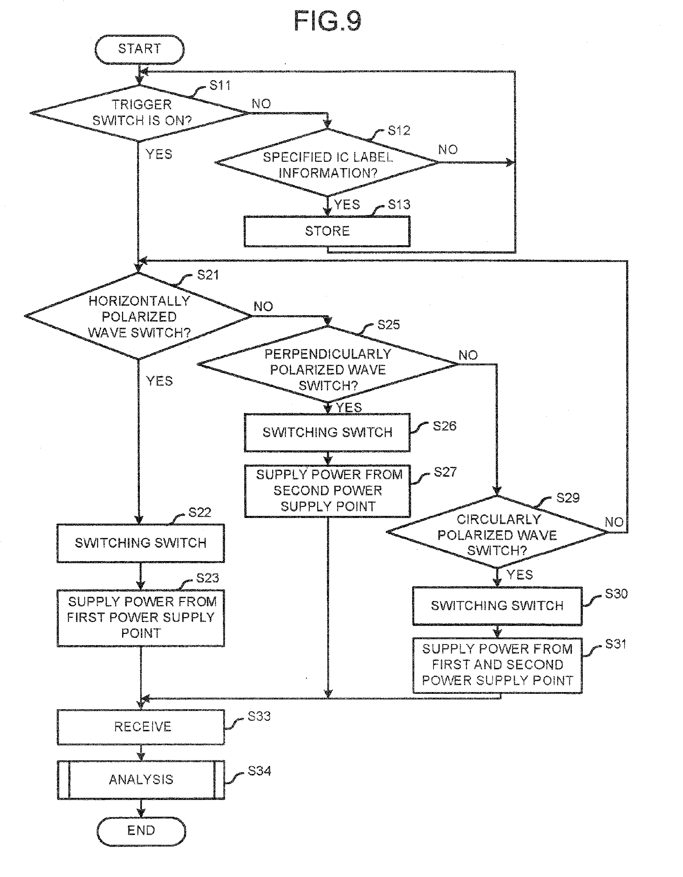

Sequentially, the control processing carried out by the RFID reader/writer 1 is described with reference to Fig. 9-Fig. 10. In Fig. 9, the control unit 11 determines whether or not an 'ON' operation is performed on the trigger switch 5 (Act S11 ('Act S' is hereinafter referred to 'S')). If it is determined that no 'ON' operation is performed (S11: No), the control unit 11 (input unit 115) determines whether or not specified IC label information representing a specified IC label is input (S12). The specified IC label information is, for example, a unique code for uniquely specifying an IC label. The specified IC label information is input from the operation unit 13 of the RFID reader/writer 1. Alternatively, the specified IC label information is input from the operation unit 83 of the portable terminal 8 via the wireless communication unit 14 of the RFID reader/writer 1.

If it is determined that the specified IC label information is input (S12: Yes), the control unit 11 (specified IC label storage unit 116) stores the specified IC label information in the memory unit 20 (S13). Then, the control unit 11 returns to execute S11. Further, if it is determined that the specified IC label information representing a specified IC label is not input (S12: No), the control unit 11 returns to execute S11.

On the other hand, if it is determined that the 'ON' operation is performed on the trigger witch 5(S11: Yes), the control unit 11 determines whether or not the horizontally polarized wave switch 131 is operated to be switched thereto (S21).

If it is determined that the horizontally polarized wave switch 131 is switched thereto (S21: Yes), the control unit 11 switches the switch 24 (S22). Specifically, in the case of the switch 24 shown in Fig. 3, the contact 24a of the switch 24 is connected with the contact 24b. In the case of the switch 24 shown in Fig. 4, the SW section 24f is connected with the SW section 24g. Then, the control unit 11 (the first emitting unit 111) sends a signal from the sending section 151 to supply power to the antenna 3 from the first power supply point 26 (S23). Then, the antenna 3 emits the horizontally polarized wave HW shown in Fig. 5 with respect to the direction orthogonal to the plane part 9 as a center.

If it is determined that the horizontally polarized wave switch 131 is not switched thereto (S21: No), the control unit 11 determines whether or not the perpendicularly polarized wave switch 132 is operated to be switched thereto (S25). If it is determined that the perpendicularly polarized wave switch 132 is switched thereto (S25: Yes), the control unit 11 switches the switch 24 (S26). Specifically, in the case of the switch 24 shown in Fig. 3, the contact 24a of the switch 24 is connected with the contact 24c. In the case of the switch 24 shown in Fig. 4, the SW section 24f is connected with the SW section 24h. Then, the control unit 11 (the second emitting unit 112) sends a signal from the sending section 151 to supply power to the antenna 3 from the second power supply point 28 (S27). In this way, the antenna 3 emits the perpendicularly polarized wave PW shown in Fig. 6 with respect to the direction orthogonal to the plane part 9 as a center.

If it is determined that the perpendicularly polarized wave switch 132 is not switched thereto (S25: No), the control unit 11 determines whether or not the circularly polarized wave switch 133 is operated to be switched thereto (S29). If it is determined that the circularly polarized wave switch 133 is switched thereto (S29: Yes), the control unit 11 switches the switch 24 (S30). Specifically, in the case of the switch 24 shown in Fig. 3, the contact 24a of the switch 24 is connected with the contact 24d. In the case of the switch 24 shown in Fig. 4, the SW section 24f is connected with the coupler 24i. Then, the control unit 11 (the third emitting unit 113) sends a signal from the sending section 151 to supply power to the antenna 3 from the first power supply point 26 and the second power supply point 28 (S31). In this way, the antenna 3 emits the circularly polarized wave CW shown in Fig. 7 with respect to the direction orthogonal to the plane part 9 as a center. If it is determined that the circularly polarized wave switch 133 is not switched thereto (S29: No), the control unit 11 returns to execute Act S21.

Then, the control unit 11 (the receiving unit 117) receives a response wave corresponding to the horizontally polarized wave emitted in S23 (S33). Further, the control unit 11 (the receiving unit 117) receives a response wave corresponding to the perpendicularly polarized wave emitted in S27 (S33). Further, the control unit 11 (the receiving unit 117) receives a response wave corresponding to the circularly polarized wave emitted in S31 (S33).

Moreover, in S33, the control unit 11 measures the intensity of the receiving power of the received response wave. In IC labels, closer the location of IC label is to the orthogonal direction of the antenna 3 of the RFID reader/writer 1 which emits electric wave, stronger the receiving power of the response wave therefrom is. Further, closer the location of IC label is to the antenna 3 of the RFID reader/writer 1, stronger the receiving power of the response wave therefrom is.

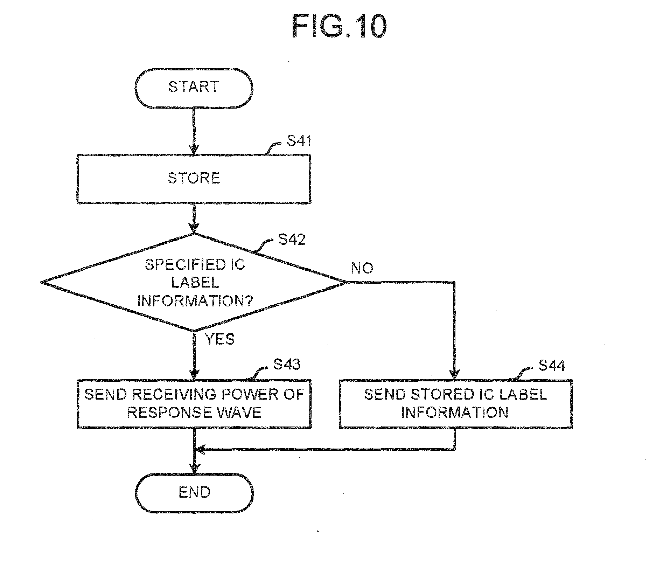

Sequentially, the control unit 11 analyzes the received response wave (S34). The flow of the response wave analysis processing in S34 is illustrated in detail in the flowchart of Fig. 10. In Fig. 10, the control unit 11 stores the received response wave in the memory unit 20 (S41). Then, the control unit 11 determines whether or not the stored response wave is identical to the response wave from the IC label specified by the specified IC label information stored in the memory unit 20 in Act S13 (S42). If it is determined that the stored response wave is identical to the response wave from the specified IC label specified by the specified IC label information (S42: Yes), the control unit 11 sends the measured intensity information of the receiving power of the response wave to the portable terminal 8 (S43) together with the specified IC label information. At this time, the control unit 11 constitutes the output unit 118. Then, the control unit 11 ends the current processing.

If it is determined that the stored response wave is not identical to the response wave from the specified IC label (S42: No), the control unit 11 sends the IC label information of the received IC label to the portable terminal 8 (S44).

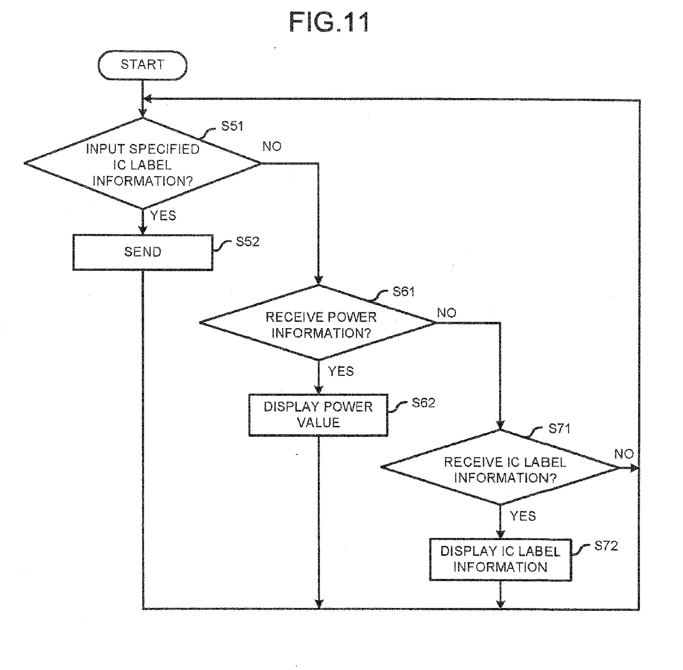

Sequentially, the flow of the control processing carried out by the portable terminal 8 mounted on the RFID reader/writer 1 is described with reference to Fig. 11. In Fig. 11, the control unit 81 determines whether or not the specified IC label information representing a specified IC label is input from the operation unit 83 (S51). If it is determined that the specified IC label information representing a specified IC label is input (S51: Yes), the control unit 81 sends the input specified IC label information to the RFID reader/writer 1 (S52).

Further, if it is determined that the specified IC label information representing a specified IC label is not input (S51: No), the control unit 81 determines whether or not the specified IC label information and receiving power information are received (S61). The specified IC label information and the receiving power information are received from the RFID reader/writer 1. If it is determined that the specified IC label information and the receiving power information are received (S61: Yes), the control unit 81 displays the received values on the display unit 82 (S62).

In this case, the control unit 81 displays the value of the receiving power of the response wave as an output level, for example. If the value of the receiving power is large, then the value is displayed as a high output level. If the value of the receiving power is small, then the value is displayed as a low output level. The value of the receiving power can be displayed as a numerical value or diagrammatized. The output level may also be displayed in other forms. If the numerical value or diagram indicates a high level, it represents that the IC label specified by the specified IC label information is located in the direction orthogonal to the surface of the antenna 3. That is, the IC label specified by the specified IC label information is located in the direction the RFID reader/writer 1 faces. On the other hand, if the numerical value or diagram indicates a low level, it represents that the IC label specified by the specified IC label information is located in a direction not orthogonal to the surface of the antenna 3. That is, the IC label specified by the specified IC label information is located in a direction different from the direction the RFID reader/writer 1 faces.

Thus, the operator operates the RFID reader/writer 1 by shaking the RFID reader/writer 1 up and down or left and right to find the position where the numerical value or the value of the diagram is changed to upper value maximally if the numerical value or diagram indicates a low level. The operator can perceive the location of the IC label in the direction where the numerical value or the value of the diagram is changed to upper value maximally. The operator moves the RFID reader/writer 1 as the RFID reader/writer is directed to the direction in which the value or diagram is changing maximally. Then, the display unit 82 further displays a larger numerical value or a larger value of the diagram. In this way, the operator can find the position of the IC label specified by specified IC label information.

If the RFID reader/writer 1 detects the direction in which the numerical value or the value of the diagram is a maximum, the buzzer 29 may issue a sound to notify the operator of this situation. Thus, the operator is easily aware of the direction where the IC label locates. Further, if the RFID reader/writer 1 approaches to the IC label and the numerical value or the value of the diagram is beyond a designated value, the buzzer 29 may issue a sound to notify the operator of this situation. In this way, the operator can perceive that he or she locates close to the IC label.

On the other hand,if it is determined that the value of the receiving power of the response wave of the IC label specified by the specified IC label information is not received (S61: No), the control unit 81 determines whether or not a response wave (identification code) to the emitted electric wave is received (S71). If it is determined that a response wave (identification code) to the emitted electric wave is received (S71: Yes), the control unit 81 displays an IC label specified by the received response wave (S72). The operator looks the displayed IC label to grasp an IC label which can be read.

In accordance with the embodiment, if the operator reads an IC label with the RFID reader/writer 1, the horizontally polarized wave HW, the perpendicularly polarized wave PW and the circularly polarized wave CW are emitted by switching from the RFID reader/writer 1. Specifically, the operator first operates the horizontally polarized wave switch 131 or the perpendicularly polarized wave switch 132. The operator may alternatively operate the horizontally polarized wave switch 131 and the perpendicularly polarized wave switch 132. Then, the RFID reader/writer 1 emits the horizontally polarized wave or the perpendicularly polarized wave. Then, the RFID reader/writer 1 receives specified IC label information from the specified IC label which locates relatively apart therefrom. Then, the operator confirms the direction in which the specified IC label locates. Next, the operator operates the circularly polarized wave switch 133. The RFID reader/writer 1 emits a circularly polarized wave. Then, the operator can find the specified IC label while approaching to the direction in which the specified IC label locates.

In this way, the RFID reader/writer 1 can read an IC label, no matter how far the IC label is and which direction the IC label faces.

Further, the value or diagram of receiving power from the specified IC label is displayed on the display unit 82, thus, the operator can find an object to which the IC label is attached while observing the displayed content.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

For example, in the embodiment, although the direction and the position of an IC label is determined according to the intensity of the power of a response wave from the IC label, it may be determined according to the number of times the IC label responds. Since the IC label located in the orthogonal direction to the antenna 3 emits a strong electric wave, the number of times the IC label responds increases. Based on this reason, the number of times the IC label responds is counted up, and then the number of times counted is displayed or the value of the diagram is increased. In this way, it may detect the location direction of the IC label. Moreover, if the location of the IC label is detected, the phenomenon in which closer the antenna comes to the IC label, greater the number of times the IC label responds is taken into consideration. It is easier to find the IC label.

Further, in the embodiment, it is described that in order to synthesize a circularly polarized wave CW, a 90-degree angle is formed between the power supplied to the antenna 3 for the emission of the horizontally polarized wave HW and the power supplied to the antenna 3 for the emission of the perpendicularly polarized wave PW. Definitely, a 90-degree angle is preferable, however, the angle of nearly 90 degrees is also adoptable. Similarly, the phases of the horizontally polarized wave HW and the perpendicularly polarized wave PW are preferably deviated from each other by 90 degrees; however, an angle of nearly 90 degrees is applicable.

Further, a well-known phase shift circuit inserted between the switch 24 and the antenna 3 may produce a phase difference between the horizontally polarized wave and the perpendicularly polarized wave.

Further, in the embodiment, although receiving power information is displayed on the display unit 82 of the portable terminal 8, it may also be displayed on the display unit 12 of the RFID reader/writer 1.

Further, in the embodiment, an RFID reader/writer is used as an IC label device; however, the IC label device may be another device (IC label reading apparatus) different from the RFID reader/writer.

## Claims

1. An IC label reader, comprising:
an antenna having a first power supply point for power supply and a second power supply point for power supply which substantially forms a 90-degree angle with the first power supply point;
a first emitting unit configured to emit a horizontally polarized wave from the antenna by supplying power to the first power supply point;
a second emitting unit configured to emit a perpendicularly polarized wave from the antenna by supplying power to the second power supply point;
a third emitting unit configured to emit, from the antenna, a circularly polarized wave generated by synthesizing the horizontally polarized wave and the perpendicularly polarized wave with a phase difference between the horizontally polarized wave and the perpendicularly polarized wave by simultaneously supplying power to the first and the second power supply points; and
a switching unit configured to selectively switch the first, the second and the third emitting units.

2. The IC label reader according to claim 1, wherein
the third emitting unit emits the circularly polarized wave generated by synthesizing the horizontally polarized wave and the perpendicularly polarized wave with a 90 degree phase difference therebetween.

3. The IC label reader according to claim 1 or 2, further comprising a first power supply line configured to supply power to the first power supply point.

4. The IC label reader according to any one of claims 1 to 3, further comprising a second power supply line configured to supply power to the second power supply point.

5. The IC label reader according to claim 4, wherein the length of the second power supply line is different from that of the first power supply line.

6. The IC label reader according to claim 5, wherein the phase difference between the horizontally polarized wave and the perpendicularly polarized wave is generated with powers supplied through the first power supply line and the second power supply line.

7. The IC label reader according to any one of claims 1 to 6, further comprising a coupler configured to simultaneously supply power to the first and the second power supply points with the phase difference.

8. The IC label reader according to claim 7, wherein the horizontally polarized wave and the perpendicularly polarized wave, which are synthesized to generate the circularly polarized wave, are made different in phase from one to the other with a power supplied from the coupler to the first power supply point and a power supplied from the coupler to the second power supply point.

9. The IC label reader according to any one of claims 1 to 8, wherein
the antenna has a surface from which each polarized wave having a high directivity in the direction orthogonal to the surface is emitted.

10. The IC label reader according to any one of claims 1 to 9, further comprises:
a specified IC label input unit configured to input specified IC label information for specifying an IC label;
a specified IC label storage unit configured to store the input specified IC label information;
a receiving unit configured to receive a response from an IC label which receives the electric wave emitted from the first emitting unit, the second emitting unit or the third emitting unit; and
an output unit configured to output direction information representing the direction of the location of the IC label specified by the stored specified IC label information according to the received response condition.
